# FASCICULE DE BREVET EUROPEEN

(11) **EP 3 526 956 B1**
(45) Date de publication et mention de la délivrance du brevet: **30.11.2022**
(21) Numéro de dépôt: 17794367.7
(22) Date de dépôt: 11.10.2017
(51) Int. Cl.: H04L 61/5014

(54) **PROCÉDÉ DE NÉGOCIATION D'UNE QUALITÉ DE SERVICE OFFERTE PAR UNE PASSERELLE À DES TERMINAUX**
VERFAHREN ZUR AUSHANDLUNG EINER VON EINEM GATEWAY AN ENDGERÄTE ANGEBOTENEN DIENSTGÜTE
METHOD FOR NEGOTIATING A QUALITY OF SERVICE OFFERED BY A GATEWAY TO TERMINALS

(30) Priorité: 11.10.2016 FR 1659791
(43) Date de publication de la demande: 21.08.2019
(73) Titulaire: Orange, 92130 Issy-les-Moulineaux (FR)
(72) Inventeur: BOUVET, Bertrand, 92326 Châtillon Cedex (FR); BOIZARD, Stéphane, 92326 Châtillon Cedex (FR)
(86) Numéro de dépôt international: PCT/FR2017/052791
(87) Numéro de publication internationale: WO 2018/069643

(56) Documents cités:
- EP-A1- 2 790 386
- US-B1- 6 577 628
- US-B1- 6 876 667

## Description

### Domaine technique

La demande d'invention se situe dans le domaine des télécommunications et plus particulièrement dans le domaine des points d'accès réseau, tels que les passerelles résidentielles.

### Art antérieur

Les objets connectés sont caractérisés par leur capacité à se connecter à un réseau de télécommunication afin d'échanger des données avec d'autres équipements. Il peut s'agir par exemple de balances connectées, d'équipement électroménager, de bracelet ou encore de jouets. De tels objets connaissent aujourd'hui un fort développement. Ces objets connectés peuvent soit utiliser une connexion directe avec un point d'accès réseau, soit utiliser une connexion indirecte au travers d'un équipement intermédiaire qui lui-même gère une ou plusieurs autres technologies d'accès.

La connexion au point d'accès peut se faire via une connexion filaire ou bien encore via une connexion sans fil, comme une connexion WiFi ou Bluetooth.

De manière classique, une adresse est attribuée à de tels équipements lors d'une phase d'attachement de l'objet au réseau. Pour cela, le point d'accès réseau affecte une adresse IP (Internet Protocol) privée aux objets connectés qui se manifestent par l'intermédiaire du protocole DHCP (Dynamic Host Configuration Protocol).

Lors de l'attribution d'une adresse IP à un terminal, le protocole DHCP peut également fournir aux terminaux une adresse IP « par défaut » ainsi que l'adresse d'un serveur DNS (Domain Name Server). Ces adresses sont généralement des adresses privées permettant à la passerelle d'intercepter et/ou de relayer les messages émis par les terminaux à destination d'autres équipements.

Les objets connectés peuvent être de tous type et peuvent communiquer avec des plates-formes de services qui sont totalement indépendantes de l'opérateur télécom en charge du point d'accès réseau.

Certains objets connectés, en fonction de leur application, peuvent avoir besoin d'une qualité de service différenciée. Par exemple, un objet mettant en œuvre un service de Voix sur IP n'a pas les mêmes caractéristiques de trafic ni les mêmes exigences réseau qu'une balance électronique. Certains types d'objets ou de terminaux peuvent ainsi nécessiter une configuration particulière du NAT (Network Adresse Translation) de la passerelle ou du firewall, ou encore un marquage particulier des paquets sortants. Un exemple de passerelle attribuant une certaine qualité de service au traffic provenant de différents terminaux est décrit dans le document EP2790386A1.

Or, les passerelles résidentielles n'offrent généralement qu'un paramétrage unique pour les terminaux et dispositifs du réseau local et fonctionnent dans un mode « Best effort » sans faire de distinction entre les terminaux.

Il existe donc un besoin pour adapter la qualité de service selon les besoins propres des différents terminaux et objets connectés d'un réseau local.

### Résumé de l'invention

L'invention est décrite dans les revendications indépendantes.

Le procédé propose ainsi d'associer une ou plusieurs adresses IP de la passerelle sur son interface LAN avec différents paramétrages de la passerelle correspondant à différentes qualités de services. Ainsi, les paquets reçus par la passerelle via une adresse IP particulière sont traités avec une qualité de service particulière. De cette façon, la passerelle peut offrir une qualité de service particulière à un terminal en lui communiquant une adresse de passerelle particulière. De cette façon, les paquets de données adressés à une première adresse de passerelle par défaut seront traités selon un premier paramétrage de qualité de service alors que des paquets de données adressés à une seconde adresse de passerelle par défaut seront traités selon un second paramétrage de qualité de service, distinct du premier paramétrage. Les adresses de passerelles par défaut communiquées aux terminaux peuvent respectivement correspondre à des interfaces réseau matérielles différentes sur la passerelle. Il peut aussi s'agir d'interfaces virtuelles, configurées sur une seule interface réseau matérielle de la passerelle. Par exemple, il peut s'agir d'une première et d'une seconde interface Ethernet matérielle ou une première et une seconde adresses IP privées associées à une même interface matérielle. Le trafic issu de ce terminal sera alors traité par la passerelle selon le paramétrage associé à l'adresse de passerelle utilisée par le terminal. Le terminal peut ainsi bénéficier d'une qualité de service différenciée.

Dans le cadre de l'invention, une passerelle correspond à un équipement d'interconnexion entre un réseau local de type LAN (Local Area Network) et un réseau étendu de type WAN (Wide Area Network). Il s'agit par exemple d'un point d'accès, comme par exemple un point d'accès de type Hot Spot, un point d'accès à un réseau cellulaire ou encore une passerelle résidentielle ou d'un modem routeur offrant une connectivité Ethernet ou Wifi à des terminaux d'un réseau local. De manière classique, de tels équipements disposent d'une interface réseau LAN mettant en œuvre un plan d'adressage privé et une ou plusieurs interfaces WAN disposant d'une adresse publique. Ce type de passerelle dispose généralement d'un pare-feu visant à protéger les terminaux du réseau local, d'un module de translation d'adresses tel qu'un NAT (Network Address Translation) ou encore d'un module de priorisation de trafic. Un tel équipement comprend en outre un serveur DHCP (Dymanic Host Configuration Protocol) dont le rôle est de communiquer des informations de configuration aux terminaux lors de leur attachement au réseau local. Par exemple, le serveur DHCP peut transmettre une configuration comprenant une adresse IP (Internet Protocol) attribuée au terminal, un masque de sous-réseau, l'adresse d'une passerelle par défaut vers laquelle les terminaux doit diriger son trafic sortant. L'interface WAN est généralement associée à un client DHCP configuré pour recevoir des informations de configuration en provenance d'un serveur DHCP du réseau, et en particulier pour recevoir une adresse IP public attribuée par l'opérateur du réseau WAN, un masque de sous-réseau et une adresse de routeur par défaut. La passerelle permet ainsi de relayer des paquets de données entre les terminaux du LAN et des serveurs du WAN.

Selon un mode particulier de réalisation, le procédé de configuration est tel que le message de découverte reçu comprend au moins une indication de qualité de service demandée par le terminal.

Un terminal ou un objet connecté peut ainsi demander une qualité de service particulière lors de son attachement au point d'accès. Une telle indication peut par exemple être comprise dans un champ d'un message de demande d'attachement du terminal au réseau.

Selon un mode de réalisation particulier, le procédé est tel que le message d'offre d'attachement comporte une adresse de passerelle sélectionnée en fonction de la qualité de service demandée par le terminal.

Le message d'offre d'attachement reçu par le terminal comprend une adresse IP d'une passerelle sélectionnée selon l'indication de qualité de service comprise dans le message de découverte émis par le terminal. Ainsi, le trafic émis par le terminal à destination de cette adresse sera traité par la passerelle avec la qualité de service souhaitée par le terminal.

Selon un mode de réalisation particulier, le procédé est tel que le message de découverte est un message DISCOVER conforme au protocole DHCP et que le message d'offre d'attachement est un message OFFER conforme au protocole DHCP.

L'utilisation d'un protocole mis en œuvre par une grande majorité des terminaux pour transmettre une donnée de configuration d'une qualité de service particulière permet avantageusement de mettre en œuvre l'invention sans qu'il soit nécessaire d'adapter le parc de terminaux et d'objets connectés déjà déployés.

Selon une réalisation particulière, le procédé est tel que le paramétrage de qualité de service comprend une configuration de NAT particulière.

La translation d'adresse (ou NAT, pour Network Address Translation) est une technique mis en œuvre de manière classique sur les passerelles réseau, visant à traduire des adresses privées attribuées à des équipements d'un réseau local (LAN, pour Local Area Network) en adresses publiques utilisables sur l'interface WAN (pour Wide Area Network) de la passerelle. Pour cela, le NAT maintien des associations entre des adresses de terminaux et des ports de communication attribués sur le réseau local avec des adresses et des ports publics sur l'interface WAN. Cette association est maintenue par la passerelle pour une durée limitée. Pour que des paquets de données reçus sur l'interface WAN puissent être routés vers le bon terminal via l'interface LAN, l'association doit être active. Pour maintenir cette association active, les terminaux doivent émettre régulièrement des paquets de données. Les objets connectés doivent ainsi maintenir active la configuration du NAT en utilisant différentes techniques globalement basées sur la génération de trafic avant la fin de période de vie de l'association dans le NAT.

De cette façon, la passerelle peut configurer des règles de NAT différentes selon le terminal qui s'attache au point d'accès.

Selon un mode de réalisation particulier, le procédé est remarquable en ce que le paramétrage de qualité de service comprend une configuration particulière du protocole IP sur l'interface vers le réseau étendu de la passerelle.

Généralement, toutes les applications, terminaux et objets connectés reliés à l'interface LAN du point d'accès réseau disposent de la qualité « best effort ». Les trafics montants issus du LAN sont mis en file d'attente dans le routeur du point d'accès réseau et ce trafic est émis sur le WAN dans l'ordre d'arrivée des paquets dans la file. Certains services pourraient pourtant nécessiter des traitements différenciés, par exemple des applications temps réel de type VoIP (Voice over IP), pour lesquels l'envoi des paquets VoIP vers le réseau pourrait être traité en priorité vis-à-vis des autres paquets de données en file d'attente dans le routeur. Le procédé permet par exemple d'associer une adresse par défaut côté LAN à une stratégie de marquage des paquets sortants, par exemple selon le protocole DSCP (Differentiated Services Code Point), afin qu'ils bénéficient d'un meilleur traitement dans les routeurs empruntés sur le réseau dans le sens montant.

Selon un mode de réalisation particulier, le procédé est tel que le paramétrage de qualité de service comprend une configuration spécifique du pare-feu.

L'utilisation d'un pare-feu dans une passerelle résidentielle par exemple, peut nuire au bon fonctionnement de certains services, terminaux ou objets connectés au réseau local. Certaines applications nécessite alors une configuration particulière du pare-feu afin par exemple d'autoriser du trafic entrant sur un port particulier. Le procédé selon l'invention permet avantageusement de communiquer à un terminal particulier une adresse de passerelle par défaut associée à un paramétrage particulier du pare-feu, sans entraver le fonctionnement d'autres terminaux ou services.

Selon un mode particulier de réalisation, le procédé est tel que le paramétrage de qualité de service comprend la sélection d'une interface particulière parmi une pluralité d'interfaces vers des réseaux étendus.

Une passerelle résidentielle ou un point d'accès réseau peut disposer d'une pluralité de connexions WAN. Par exemple, un point d'accès peut disposer d'une interface ADSL (Asymétrie Digital Subscriber Line) et d'une interface à un réseau cellulaire 4G. Le procédé permet dans un tel cas d'associer une adresse IP locale sur l'interface LAN à une interface WAN particulière, de sorte que les paquets de données reçus sur une adresse privée de passerelle particulière soient routés vers une interface WAN particulière.

Selon un autre aspect, et de façon correspondante au procédé de configuration décrit précédemment, l'invention concerne un procédé de négociation d'une qualité de service offerte par une passerelle pour l'accès d'un terminal à un réseau de communication suite à l'émission par le terminal d'un message de découverte réseau, le procédé étant caractérisé en ce qu'il comprend les étapes suivantes :
- réception d'un message d'offre d'attachement réseau, le message comprenant au moins une adresse de passerelle, ladite adresse étant associée sur la passerelle à un paramétrage de qualité de service particulier.

Un terminal ou un objet connecté reçoit ainsi dans un message d'offre d'attachement à un réseau l'adresse d'une passerelle vers laquelle émettre son trafic sortant. Cette adresse est associée sur la passerelle à un paramétrage particulier de la qualité de service. De cette façon, le terminal ou l'objet connecté peut bénéficier d'un paramétrage différent des autres terminaux.

Selon une réalisation particulière, le procédé de négociation est remarquable en ce que le message de découverte émis comprend au moins une indication de qualité de service demandée par le terminal.

Le terminal peut ainsi communiquer à une passerelle résidentielle ou un point d'accès mettant en œuvre le procédé de configuration une qualité de service adaptée à ses besoins.

Selon un mode particulier de réalisation, le procédé de négociation est tel qu'au moins une adresse de passerelle comprise dans le message d'offre d'attachement reçu est sélectionnée par la passerelle en fonction de la au moins une indication de qualité de service demandée par le terminal.

Le terminal ou l'objet communiquant reçoit ainsi dans un message d'offre d'attachement, une adresse d'une passerelle par défaut vers laquelle émettre des paquets de données. Cette adresse est remarquable en ce qu'elle est associée à un paramétrage particulier de la passerelle résidentielle ou du point d'accès, ledit paramétrage mettant en œuvre une qualité de service correspondant à la qualité de service demandée dans le message de découverte préalablement émis par le terminal. Le terminal peut ainsi disposer d'une qualité de service adaptée à ses besoins, indépendamment de la qualité de service offerte par la passerelle à d'autres terminaux.

Selon un mode de réalisation particulier, le procédé est remarquable en ce que le message de découverte est un message DISCOVER conforme au protocole DHCP et que le message d'offre d'attachement est un message OFFER conforme au protocole DHCP.

Ainsi, un terminal peut communiquer une qualité de service désirée et recevoir une adresse de passerelle par défaut vers laquelle router son trafic sortant afin d'obtenir la qualité de service demandée en mettant en œuvre un protocole existant. Une telle disposition facilite le déploiement du procédé.

Selon une réalisation particulière de l'invention, le procédé de négociation est remarquable en ce que le paramétrage de qualité de service comprend une configuration de NAT particulière.

Le procédé permet ainsi d'associer une configuration particulière du NAT à une adresse de passerelle par défaut, de façon à ce que les terminaux configurés avec cette adresse puissent bénéficier de cette configuration sans que d'autres terminaux configurés avec une adresse de passerelle par défaut différente soient concernés par cette configuration.

Selon un mode particulier de réalisation, le procédé de négociation est tel que le paramétrage de qualité de service comprend une configuration particulière du protocole IP sur l'interface vers le réseau étendu de la passerelle.

Généralement, toutes les applications, terminaux et objets connectés reliés à l'interface LAN du point d'accès réseau disposent de la qualité « best effort ». Les trafics montants issus du LAN sont mis en file d'attente dans le routeur du point d'accès réseau et ce trafic est émis sur le WAN dans l'ordre d'arrivée des paquets dans la file. Certains services pourraient pourtant nécessiter des traitements différenciés, par exemple des applications temps réel de type VoIP (Voice over IP), pour lesquels l'envoi des paquets VoIP vers le réseau pourrait être traité en priorité vis-à-vis des autres paquets de données en file d'attente dans le routeur. Le procédé permet par exemple d'associer une adresse par défaut côté LAN à une stratégie de marquage des paquets sortants, par exemple selon le protocole DSCP (Differentiated Services Code Point), afin qu'ils bénéficient d'un meilleur traitement dans les routeurs empruntés sur le réseau dans le sens montant.

Selon un mode de réalisation particulier, le procédé de négociation est tel que le paramétrage de qualité de service comprend une configuration spécifique du pare-feu.

L'utilisation d'un pare-feu dans une passerelle résidentielle par exemple, peut nuire au bon fonctionnement de certains services, terminaux ou objets connectés au réseau local. Certaines applications nécessitent alors une configuration particulière du firewall afin par d'exemple d'autoriser du trafic entrant sur un port particulier. Le procédé selon l'invention permet avantageusement de communiquer à un terminal particulier une adresse de passerelle par défaut associée à un paramétrage particulier du pare-feu, sans entraver le fonctionnement d'autres terminaux ou services.

Selon un mode de réalisation particulier, le procédé de négociation est tel que le paramétrage de qualité de service comprend la sélection d'une interface particulière parmi une pluralité d'interfaces de la passerelle vers des réseaux étendus.

Une passerelle résidentielle ou un point d'accès réseau peut disposer d'une pluralité de connexions WAN. Par exemple, un point d'accès peut disposer d'une interface ADSL (Asymétrie Digital Subscriber Line) et d'une interface à un réseau cellulaire 4G. Le procédé de négociation permet dans un tel cas d'associer une adresse IP locale sur l'interface LAN à une interface WAN particulière, de sorte que les paquets de données émis par le terminal vers cette adresse privée de la passerelle soient routés vers une interface WAN particulière.

Selon un autre aspect, l'invention concerne un dispositif de configuration d'une qualité de service pour l'accès d'un terminal à un réseau de communication suite à la réception par le dispositif d'un message de découverte réseau émis par le terminal, le dispositif étant caractérisé en ce qu'il comprend :
- une mémoire adaptée pour mémoriser au moins une association entre une adresse de la passerelle sur le réseau local et un paramétrage de qualité de service particulier de la passerelle,
- une interface de communication adaptée pour envoyer un message d'offre d'attachement réseau vers le terminal, le message comprenant la au moins une adresse de passerelle par défaut, et
- des moyens de communication adaptés pour recevoir au moins un message en provenance du terminal et à destination de l'adresse de passerelle par défaut, traitement du paquet selon le paramétrage associé à l'adresse de passerelle par défaut

Selon encore un autre aspect, et de façon correspondante au dispositif de configuration décrit ci-avant, l'invention concerne un dispositif de négociation d'une qualité de service offerte par une passerelle domestique pour l'accès à un réseau de communication suite à l'émission par le dispositif d'un message de découverte réseau, le dispositif étant caractérisé en ce qu'il comprend:
- une interface de communication adaptée pour recevoir un message d'offre d'attachement réseau, le message comprenant au moins une adresse de passerelle par défaut associée avec un paramétrage de qualité de service particulier sur la passerelle, et
- une interface de communication adaptée pour émettre des paquets de données vers l'adresse de passerelle par défaut comprise dans le message d'attachement réseau.

L'invention se rapporte en outre à une passerelle résidentielle comportant un dispositif de configuration tel que décrit précédemment, et à un terminal ou un objet connecté comportant un dispositif de négociation tel que décrit ci-dessus.

Dans un mode particulier de réalisation, les différentes étapes des procédés selon l'invention sont déterminées par des instructions de programmes d'ordinateurs.

En conséquence, l'invention vise également un programme d'ordinateur comportant des instructions pour l'exécution des étapes du procédé de configuration et/ou du procédé de négociation, lorsque ledit programme est exécuté par un processeur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Enfin, l'invention concerne un support d'informations lisible par un processeur sur lequel est enregistré un programme d'ordinateur comprenant des instructions pour l'exécution des étapes du procédé de configuration et/ou de négociation.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de restitution tel que défini ci-dessus.

Les terminaux, passerelles, dispositifs et programmes présentent au moins des avantages analogues à ceux conférés par le procédé de restitution décrit ci-dessus.

### Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre une architecture réseau adaptée pour mettre en œuvre l'invention, selon un mode particulier de réalisation,
- la figure 2 représente les différentes étapes des procédés de négociation et de configuration, ainsi que des messages échangés, selon un mode particulier de réalisation,
- la figure 3 illustre un exemple de table d'une base de données adaptée pour mémoriser une association entre des adresses de passerelle et une qualité de service particulière,
- la figure 4 représente l'architecture d'un dispositif de configuration selon une réalisation particulière de l'invention, et
- la figure 5 représente l'architecture d'un dispositif de négociation selon un mode particulier de réalisation.

### Description détaillée

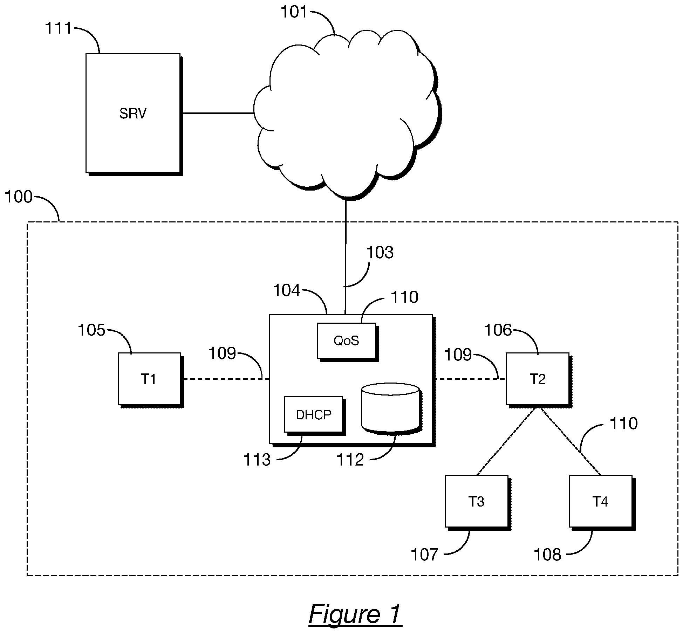

La figure 1 illustre une architecture réseau adaptée pour mettre en œuvre l'invention, selon un mode particulier de réalisation.

On distingue un réseau local 100 connecté à un réseau Internet 101 par l'intermédiaire d'une connexion WAN 103 et d'une passerelle 104, comme par exemple une passerelle résidentielle, un modem routeur ou tout autre type de point d'accès permettant une interconnexion du réseau local avec un réseau WAN. La connexion 103 est par exemple une connexion ADSL ou fibre optique. La passerelle 104 comprend un serveur d'attribution d'adresses 113 tel qu'un serveur DHCP. De cette façon, la passerelle peut attribuer des adresses IP à des terminaux 105 et 106 du réseau local 100. De tels terminaux peuvent utiliser une connexion 109 filaire ou sans fil de type Ethernet ou encore Wifi pour communiquer avec la passerelle 104. Le terminal 106 est par exemple un équipement intermédiaire configuré pour permettre la connexion de terminaux 107 et 108 disposant de moyens de communication non supportés par la passerelle 104, comme par exemple des protocoles propriétaires ou trop spécifiques. La passerelle 104 comprend un module de gestion de la qualité de service (QoS pour Quality Of Service). Un tel module peut agir sur différents composants de la passerelle pour ajuster la qualité de service. Par exemple, le module 110 peut appliquer une configuration du NAT particulière, configurer des règles de pare-feu particulières ou encore par exemple marquer des paquets selon un protocole de différenciation de service tel que DiffServ ou DSCP ou encore sélectionner une interface WAN parmi une pluralité d'interfaces WAN disponibles ou encore segmenter/assembler des paquets pour s'adapter aux caractéristiques de l'interface WAN sélectionnée par exemple pour s'adapter aux paramètres MTU (Maximum Transmission Unit) et/ou MSS (Maximum Segment Size) configuré/négocié sur l'interface WAN ou encore de configurer spécifiquement la pile protocolaire IP de l'interface WAN. De cette façon, les terminaux et objets connectés du réseau local 100 peuvent accéder à des services en ligne tels que par exemple le service 111 avec une qualité de service correspondant à la configuration mise en œuvre par le module 110.

La passerelle 104 comprend en outre une mémoire, comme par exemple une base de données 112 adaptée pour mémoriser une configuration du module 110.

De manière connue, lorsqu'un terminal tel que le terminal 105 souhaite se connecter à un point d'accès, il émet en mode broadcast un message DHCP DISCOVER. Par l'intermédiaire de ce message, un terminal peut demander à ce qu'un point d'accès ou une passerelle lui communique certains paramètres, comme par exemple, une adresse IP, un masque de sous-réseau, l'adresse d'une passerelle par défaut ou tout autre paramètre. En particulier, le protocole DHCP permet à un terminal de demander des paramètres non-standards sans affecter le fonctionnement d'un serveur DHCP ne prenant pas en charge ces paramètres.

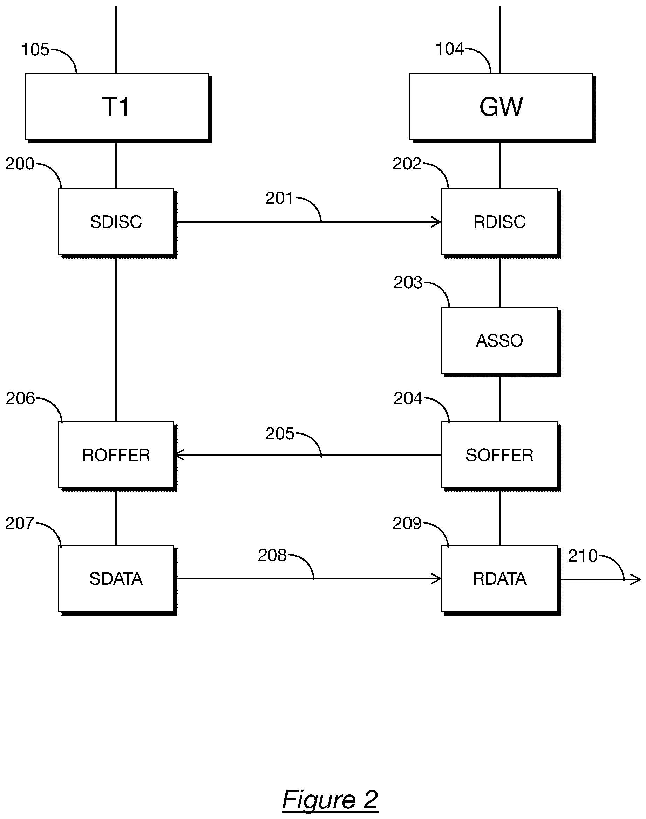

Les principales étapes des procédés de négociation et de configuration vont maintenant être décrites en relation avec la figure 2.

Un message DHCP DISCOVER 201 est émis par le terminal 105 à l'étape 200. Un tel message peut être émis lors de l'attachement initial du terminal 105 au réseau 107. Le message comporte des demandes de paramètres, et en particulier une adresse IP, un masque de sous réseau et une adresse de passerelle par défaut.

Selon un mode particulier de réalisation de l'invention, le message DHCP DISCOVER comprend au moins une indication de qualité de service demandée par le terminal. Cette demande peut avantageusement être indiquée dans le champ « Parameter Request List » du message DHCP DISCOVER à l'aide d'un identifiant de paramètre prédéterminé.

Selon une réalisation particulière, le message DHCP DISCOVER comprend une indication selon laquelle une liste de qualité de services disponible sur la passerelle est demandée. Cette demande peut être formulée par l'intermédiaire du champ « Parameter Request List ». Selon un mode de réalisation particulier, la passerelle recherche à l'étape 203 une association entre une adresse de passerelle par défaut utilisable sur le réseau local et une configuration de qualité de service. De telles associations sont par exemple mémorisées dans une base de données de la passerelle 104, comme par exemple dans la base de données 112. En variante, seules les différentes configurations de qualité de service sont mémorisées dans la base de données et la passerelle associe dynamiquement une adresse de passerelle par défaut à une configuration particulière de la qualité de service. La configuration particulière peut par exemple être sélectionnée selon un identifiant du terminal transmis dans le message de découverte.

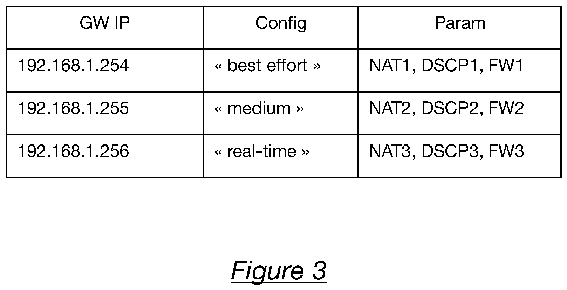

De tels paramètres de configuration d'une qualité de service peuvent comprendre un paramétrage particulier d'un pare-feu, d'un NAT ou un marquage des paquets de données émis sur le WAN. Des paramètres particuliers peuvent ainsi être appliqués à tous les paquets reçus sur une adresse IP LAN de la passerelle associée à ces paramètres. Par exemple, la figure 3 illustre une table pouvant être mémorisée dans la base de données 112 de manière à maintenir de telles associations. La table comprend une première colonne comportant des adresses IP de passerelle par défaut, la seconde colonne comprend de manière optionnelle un nom de configuration, pouvant servir par exemple à identifier une configuration de qualité de service à partir d'un nom compris dans un DHCP DISCOVER message reçu, et une troisième colonne comportant un paramétrage particulier de différents modules adaptés pour mettre en œuvre la qualité de service associée à l'adresse IP de la première colonne.

Selon une réalisation particulière, dans lequel le message DHCP DICOVER comprend une indication de qualité de service demandée, la passerelle recherche dans la base de données 112 à l'aide d'une requête SQL (Simple Query Language) adaptée une adresse de passerelle par défaut associée à une configuration de qualité de service correspondant à la qualité de service demandée par le terminal.

A l'étape 204, la passerelle émet une réponse à la demande d'attachement reçue à l'étape 202. Il s'agit par exemple d'une réponse DHCP OFFER 205. Selon l'invention, la réponse comprend une adresse IP de passerelle par défaut, l'adresse étant associée à une configuration de qualité de service particulière, telle qu'identifiée à l'étape 203. Selon une réalisation particulière, l'adresse IP de la passerelle par défaut est associée à une configuration de qualité de service correspondant à l'indication de qualité de service demandée du message DHCP DISCOVER 201.

Ainsi, le terminal obtient à l'étape 206 une adresse de passerelle par défaut remarquable en ce que les paquets reçus par la passerelle sur cette adresse par défaut sont traités par ladite passerelle selon les paramètres de la configuration de qualité de service associée à l'adresse de passerelle par défaut et mémorisés dans la base de donnée 112.

A l'étape 207, le terminal émet des paquets de données 208 à destination de l'adresse de passerelle par défaut reçue dans le message 205 et associé à une qualité de service particulière.

Ainsi, lorsque la passerelle 104 reçoit les paquets de données à l'étape 209 sur l'adresse par défaut communiquée au terminal, les paquets sont traités selon les paramètres de qualité de service associés à l'adresse sur laquelle les paquets sont reçus, avant d'être relayés sur l'interface WAN de la passerelle par des messages 210. De cette façon, le procédé permet à des terminaux de négocier une qualité de service particulière, adaptée à leur besoin, et distincte de la qualité de service offerte à d'autres terminaux.

Selon un mode particulier de réalisation, le message DHCP DISCOVER 201 comprend une indication selon laquelle une liste des qualités de service disponible est demandée. Dans un pareil cas, le message DHCP OFFER 205 émis par la passerelle 104 à l'étape 204 comprend une liste des qualités de services supportées. Selon une variante préférée, le message DHCP OFFER comprend une liste d'adresses de passerelle par défaut, chacune des adresses étant associée à une qualité de service particulière.

Selon une réalisation particulière, l'ordre dans lequel sont listées les différentes adresses de passerelle par défaut est représentatif de la qualité de service associée. Par exemple, la première adresse de passerelle par défaut listée dans le message DHCP OFFER correspond à la qualité de service « best effort », la seconde adresse listée à la qualité de service « moyenne » et la troisième adresse listée à la qualité de service « temps réel ». De cette façon, un terminal peut sélectionner l'adresse par défaut qui correspond à la qualité dont il a besoin.

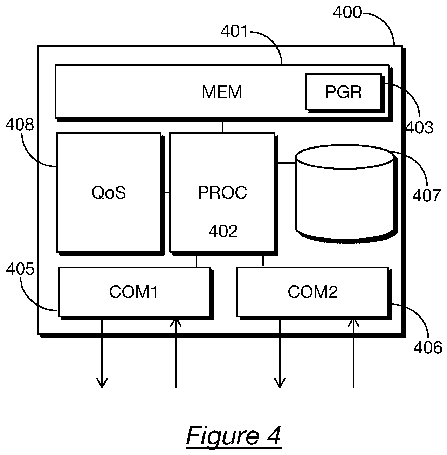

La figure 4 illustre l'architecture d'un dispositif adapté pour mettre en œuvre le procédé de configuration. Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en œuvre le procédé de configuration tel que décrit dans l'invention en référence à la figure 2, et notamment les étapes de réception par la passerelle d'un message de découverte réseau émis par le terminal, d'association d'au moins une adresse de passerelle par défaut avec un paramétrage de qualité de service particulier de la passerelle, d'envoi d'un message d'offre d'attachement réseau vers le terminal, le message comprenant la au moins une adresse de passerelle par défaut, et à la réception d'un message en provenance du terminal et à destination de l'adresse de passerelle par défaut, traitement du paquet selon le paramétrage associé à l'adresse de passerelle par défaut.

À l'initialisation, les instructions du programme d'ordinateur 403 sont par exemple chargées dans une mémoire RAM (Random Access Memory) avant d'être exécutées par le processeur de l'unité de traitement 402. Le processeur de l'unité de traitement 402 met en œuvre les étapes du procédé de configuration selon les instructions du programme d'ordinateur 403.

Pour cela, le dispositif comporte une interface 405 (COM1) vers un réseau de communication local de type LAN. Il peut s'agir d'une interface Ethernet ou WiFi par exemple. L'interface 405 est adaptée pour échanger des données avec d'autres dispositifs, et notamment avec un terminal du réseau local. L'interface est en particulier adaptée pour recevoir un message DHCP DISCOVER émis par un terminal du réseau local. Selon une réalisation particulière, l'interface est adaptée pour recevoir un message DHCP DISCOVER comprenant une indication selon laquelle une qualité de service particulière est demandée et/ou une indication selon laquelle une liste des qualités de service supportées par le dispositif est demandée. L'interface de communication 405 est également adaptée pour transmettre des données à des terminaux du réseau local, et en particulier pour envoyer des messages DHCP OFFER comprenant au moins une adresse de passerelle par défaut.

Le dispositif 400 comprend en outre une mémoire 407 adaptée pour mémoriser au moins une association entre une adresse de passerelle par défaut et un paramétrage de qualité de service. Il s'agit par exemple d'une base de données ou d'une mémoire persistante telle qu'une mémoire flash.

Le dispositif 400 comprend aussi des moyens de traitement 408 des paquets reçus sur une adresse de passerelle par défaut de l'interface LAN selon le paramétrage associé à l'adresse de passerelle par défaut. Ces moyens de traitements sont par exemple mis en œuvre par un processeur adapté pour exécuter des instructions d'un programme d'ordinateur configuré pour effectuer une requête dans la base de données 407 afin de rechercher un paramétrage associé à une adresse de passerelle par défaut, et mettre en œuvre ce paramétrage pour les paquets reçus sur ladite adresse de passerelle par défaut. La mise en œuvre du paramétrage peut consister en une configuration d'un pare-feu, d'un NAT ou d'un module de marquage des paquets émis sur l'interface WAN de la passerelle.

Le dispositif de configuration peut être intégré dans les points d'accès réseau tels que les passerelles résidentielles, les points d'accès Hop Spot WiFi, les clés USB donnant accès aux réseaux cellulaires 2G/3G/4G, ou encore dans des terminaux mobiles pouvant être utilisés en tant que point d'accès.

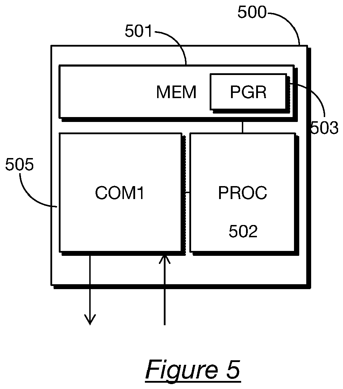

La figure 5 illustre l'architecture d'un dispositif 500 adapté pour mettre en œuvre le procédé de négociation. Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé de négociation tel que décrit dans l'invention en référence à la figure 2, et notamment les étapes d'émission par le terminal d'un message de découverte réseau, et de réception d'un message d'offre d'attachement réseau, le message comprenant au moins une adresse de passerelle par défaut associée avec un paramétrage de qualité de service particulier.

À l'initialisation, les instructions du programme d'ordinateur 503 sont par exemple chargées dans une mémoire RAM (Random Access Memory) avant d'être exécutées par le processeur de l'unité de traitement 502. Le processeur de l'unité de traitement 502 met en œuvre les étapes du procédé de négociation selon les instructions du programme d'ordinateur 503.

Pour cela, le dispositif comporte une interface 505 (COM1) vers un réseau de communication local de type LAN. Il peut s'agir d'une interface Ethernet ou WiFi par exemple. L'interface 505 est adaptée pour échanger des données avec d'autres dispositifs, et notamment avec une passerelle du réseau local permettant l'accès à un réseau de type WAN. L'interface 505 est en particulier adaptée pour émettre un message de découverte réseau tel qu'un message DHCP DISCOVER. Selon une réalisation particulière, l'interface est adaptée pour émettre un message de découverte réseau comportant une indication selon laquelle une qualité de service particulière est demandée et/ou une indication selon laquelle une liste des qualités de service supportées par la passerelle est demandée.

L'interface 505 est également adaptée pour recevoir un message d'offre d'attachement réseau tel qu'un message DHCP OFFER en provenance d'une passerelle, le message comprenant au moins une adresse de passerelle par défaut telle que l'adresse est associée à une qualité de service particulière mis en œuvre sue la passerelle. Selon un mode de réalisation particulier, l'interface est adaptée pour recevoir un message d'offre d'attachement comportant plusieurs adresses de passerelle par défaut, chacun des adresses étant associée à une qualité de service particulière sur la passerelle, l'ordre des adresses listées dans le message étant représentatif de la qualité de service offerte par la passerelle à des messages reçus sur chacune des adresses de passerelle par défaut.

L'interface 505 est enfin adaptée pour émettre des paquets de données à destination d'une adresse de passerelle par défaut reçue dans un message d'offre d'attachement réseau et étant associée à une qualité de service particulière. Pour cela, le dispositif peut mettre en œuvre un module de configuration adapté pour configurer une interface réseau avec l'adresse de passerelle par défaut reçue dans un message DHCP OFFER.

Le dispositif de négociation peut être intégré dans des terminaux mobiles ou fixes, des tablettes, ou encore dans des objets connectés.

## Revendications

1. Procédé, implémenté dans un équipement d'interconnexion entre un réseau local et un réseau étendu, comprenant :
- une réception sur au moins une première interface dudit équipement d'interconnexion avec ledit réseau local, d'un message de découverte réseau émis par un terminal du réseau local,
le procédé étant **caractérisé en ce qu'**il comprend :
- un envoi d'un message d'offre d'attachement réseau vers le terminal, le message d'offre d'attachement réseau comprenant au moins deux adresses dudit équipement d'interconnexion sur ledit réseau local, une première desdites adresses étant associée à un premier paramétrage de qualité de service dudit équipement d'interconnexion pour accéder audit réseau étendu, et une seconde desdites adresses étant associée à un second paramétrage de qualité de service dudit équipement d'interconnexion pour accéder audit réseau étendu, et
- sur réception d'un moins un paquet de données en provenance du terminal et à destination de l'une desdites adresses dudit équipement d'interconnexion comprises dans ledit message d'offre d'attachement réseau, un traitement du paquet de données selon le paramétrage de qualité de service associé à l'adresse de destination dudit équipement d'interconnexion.

2. Procédé selon la revendication 1 **caractérisé en ce que** le message de découverte reçu comprend au moins une indication de qualité de service demandée par le terminal.

3. Procédé selon la revendication 2 **caractérisé en ce qu'**au moins une desdites adresses dudit équipement d'interconnexion dépend de la qualité de service demandée par le terminal.

4. Procédé selon l'une quelconque des revendications précédentes **caractérisé en ce que** le message de découverte est un message DISCOVER conforme au protocole DHCP et que le message d'offre d'attachement est un message OFFER conforme au protocole DHCP.

5. Procédé selon l'une quelconque des revendications précédentes **caractérisé en ce que** le premier et/ou le second paramétrage de qualité de service comprend une configuration d'un protocole IP sur une seconde interface dudit équipement d'interconnexion vers le réseau étendu.

6. Procédé selon l'une quelconque des revendications précédentes **caractérisé en ce que** le premier et/ou le second paramétrage de qualité de service comprend une sélection d'une seconde interface parmi une pluralité d'interfaces vers des réseaux étendus dudit équipement d'interconnexion.

7. Procédé, implémenté dans un terminal d'un réseau de communication local, comprenant :
- une émission par le terminal d'un message de découverte réseau sur ledit réseau local,
le procédé étant **caractérisé en ce qu'**il comprend:
- une réception d'un message d'offre d'attachement réseau d'un équipement d'interconnexion interconnectant ledit réseau local avec un réseau étendu, le message d'offre d'attachement réseau comprenant au moins deux adresses d'un équipement d'interconnexion sur ledit réseau local, une première desdites adresses étant associée à un premier paramétrage de qualité de service pour accéder audit réseau étendu via ledit équipement d'interconnexion et une seconde desdites adresses étant associée à un second paramétrage de qualité de service dudit équipement d'interconnexion pour accéder audit réseau étendu,
- une transmission d'un moins un paquet de données à destination de l'une desdites adresses dudit équipement d'interconnexion contenues dans ledit message d'offre d'attachement réseau.

8. Procédé selon la revendication 7 **caractérisé en ce que** le message de découverte comprend au moins une indication d'une demande d'au moins une qualité de service disponible pour le terminal.

9. Procédé selon la revendication 8 **caractérisé en ce que** au moins une desdites adresses dudit équipement d'interconnexion comprises dans ledit message d'offre d'attachement reçu dépend de la moins une indication de qualité de service demandée par le terminal.

10. Procédé selon l'une quelconque des revendications 7 à 9 **caractérisé en ce que** ledit réseau local est un réseau sans fil.

11. Procédé selon l'une quelconque des revendications 7 à 10 **caractérisé en ce que** le premier et/ou le second paramétrage de qualité de service comprend une première configuration d'un protocole IP sur l'interface vers le réseau étendu dudit équipement d'interconnexion.

12. Procédé selon l'une quelconque des revendications 7 à 11 **caractérisé en ce que** le premier et/ou le second paramétrage de qualité de service associé comprend une sélection d'une interface parmi une pluralité d'interfaces vers des réseaux étendus dudit équipement d'interconnexion.

13. Dispositif de communication, comprenant au moins une interface de communication avec un réseau local adaptée à recevoir un message de découverte réseau émis par un terminal dudit réseau local, le dispositif étant **caractérisé en ce qu'**il comprend :
- une interface de communication sur un réseau local adaptée pour envoyer un message d'offre d'attachement réseau vers le terminal, le message comprenant au moins deux adresses dudit dispositif de communication, une première desdites adresses étant associée à un premier paramétrage de qualité de service dudit dispositif de communication pour accéder audit réseau étendu, une seconde desdites adresses étant associée à un second paramétrage de qualité de service dudit dispositif de communication pour accéder audit réseau étendu, et
- des moyens de communication adaptés pour recevoir au moins un paquet de données en provenance du terminal et à destination d'une desdites adresses dudit dispositif de communication,
- et des moyens de traitement du paquet de données reçu selon le paramétrage de qualité de service associé à ladite adresse destination dudit dispositif de communication.

14. Equipement d'interconnexion comportant un dispositif de communication selon la revendication 13.

15. Dispositif de communication, comprenant au moins une interface de communication avec un réseau local adaptée à transmettre un message de découverte réseau sur ledit réseau local, le dispositif étant **caractérisé en ce qu'**il comprend:
- une interface de communication adaptée pour recevoir un message d'offre d'attachement réseau d'un équipement d'interconnexion interconnectant ledit réseau local avec un réseau étendu, le message d'offre d'attachement réseau comprenant au moins deux adresses dudit équipement d'interconnexion sur ledit réseau local, une première desdites adresses étant associée avec un premier paramétrage de qualité de service pour accéder audit réseau étendu via ledit équipement d'interconnexion , une seconde desdites adresses étant associée avec un second paramétrage de qualité de service pour accéder audit réseau étendu via ledit équipement d'interconnexion, et
- une interface de communication adaptée pour émettre au moins un paquet de données vers au moins une desdites adresses dudit équipement d'interconnexion comprises dans le message d'offre d'attachement réseau.

16. Terminal comportant un dispositif de communication selon la revendication 15.

## Patentansprüche

1. Verfahren, das in einer Zusammenschalteinrichtung zwischen einem lokalen Netzwerk und einem Weitverkehrsnetzwerk implementiert wird, das enthält:
- einen Empfang, an mindestens einer ersten Schnittstelle der Zusammenschalteinrichtung mit dem lokalen Netzwerk, einer von einem Endgerät des lokalen Netzwerks gesendeten Netzwerkerkennung-Nachricht,
wobei das Verfahren **dadurch gekennzeichnet ist, dass** es enthält:
- das Senden einer Netzwerkverbindungsangebot-Nachricht an das Endgerät, wobei die Netzwerkverbindungsangebot-Nachricht mindestens zwei Adressen der Zusammenschalteinrichtung auf dem lokalen Netzwerk enthält, wobei eine erste der Adressen einer ersten Dienstqualitätsparametrierung der Zusammenschalteinrichtung für den Zugang zum Weitverkehrsnetzwerk zugeordnet ist, und eine zweite der Adressen einer zweiten Dienstqualitätsparametrierung der Zusammenschalteinrichtung für den Zugang zum Weitverkehrsnetzwerk zugeordnet ist,
- bei Empfang mindestens eines Datenpakets, das vom Endgerät kommt und für eine der Adressen der Zusammenschalteinrichtung bestimmt ist, die in der Netzwerkverbindungsangebot-Nachricht enthalten sind, eine Verarbeitung des Datenpakets gemäß der der Zieladresse der Zusammenschalteinrichtung zugeordneten Dienstqualitätsparametrierung.

2. Verfahren nach Anspruch 1, **dadurch gekennzeichnet, dass** die empfangene Erkennungsnachricht mindestens eine vom Endgerät geforderte Dienstqualitätsanzeige enthält.

3. Verfahren nach Anspruch 2, **dadurch gekennzeichnet, dass** mindestens eine der Adressen der Zusammenschalteinrichtung von der vom Endgerät geforderten Dienstqualität abhängt.

4. Verfahren nach einem der vorhergehenden Ansprüche, **dadurch gekennzeichnet, dass** die Erkennungsnachricht eine Nachricht DISCOVER gemäß dem Protokoll DHCP ist, und dass die Verbindungsangebot-Nachricht eine Nachricht OFFER gemäß dem Protokoll DHCP ist.

5. Verfahren nach einem der vorhergehenden Ansprüche, **dadurch gekennzeichnet, dass** die erste und/oder die zweite Dienstqualitätsparametrierung eine Konfiguration eines IP-Protokolls auf einer zweiten Schnittstelle der Zusammenschalteinrichtung zum Weitverkehrsnetzwerk enthält.

6. Verfahren nach einem der vorhergehenden Ansprüche, **dadurch gekennzeichnet, dass** die erste und/oder die zweite Dienstqualitätsparametrierung eine Auswahl einer zweiten Schnittstelle unter einer Vielzahl von Schnittstellen zu Weitverkehrsnetzwerken der Zusammenschalteinrichtung enthält.

7. Verfahren, das in einem Endgerät eines lokalen Kommunikationsnetzwerks implementiert wird, das enthält:
- Senden durch das Endgerät einer Netzwerkerkennung-Nachricht auf dem lokalen Netzwerk,
wobei das Verfahren **dadurch gekennzeichnet ist, dass** es enthält:
- einen Empfang einer Netzwerkverbindungsangebot-Nachricht einer Zusammenschalteinrichtung, die das lokale Netzwerk mit einem Weitverkehrsnetzwerk zusammenschaltet, wobei die Netzwerkverbindungsangebot-Nachricht mindestens zwei Adressen einer Zusammenschalteinrichtung auf dem lokalen Netzwerk enthält, wobei eine erste der Adressen einer ersten Dienstqualitätsparametrierung für den Zugang zum Weitverkehrsnetzwerk über die Zusammenschalteinrichtung zugeordnet ist, und eine zweite der Adressen einer zweiten Dienstqualitätsparametrierung der Zusammenschalteinrichtung für den Zugang zum Weitverkehrsnetzwerk zugeordnet ist,
- eine Übertragung mindestens eines Datenpakets an eine der Adressen der Zusammenschalteinrichtung, die in der Netzwerkverbindungsangebot-Nachricht enthalten sind.

8. Verfahren nach Anspruch 7, **dadurch gekennzeichnet, dass** die Erkennungsnachricht mindestens eine Anzeige einer Anforderung mindestens einer verfügbaren Dienstqualität für das Endgerät enthält.

9. Verfahren nach Anspruch 8, **dadurch gekennzeichnet, dass** mindestens eine der Adressen der Zusammenschalteinrichtung, die in der empfangenen Verbindungsangebot-Nachricht enthalten sind, von der mindestens einen vom Endgerät geforderten Dienstqualitätsanzeige abhängt.

10. Verfahren nach einem der Ansprüche 7 bis 9, **dadurch gekennzeichnet, dass** das lokale Netzwerk ein drahtloses Netzwerk ist.

11. Verfahren nach einem der Ansprüche 7 bis 10, **dadurch gekennzeichnet, dass** die erste und/oder die zweite Dienstqualitätsparametrierung eine erste Konfiguration eines IP-Protokolls auf der Schnittstelle der Zusammenschalteinrichtung zum Weitverkehrsnetzwerk enthält.

12. Verfahren nach einem der Ansprüche 7 bis 11, **dadurch gekennzeichnet, dass** die erste und/oder die zweite zugeordnete Dienstqualitätsparametrierung eine Auswahl einer Schnittstelle unter einer Vielzahl von Schnittstellen der Zusammenschalteinrichtung zu Weitverkehrsnetzwerken enthält.

13. Kommunikationsvorrichtung, die mindestens eine Kommunikationsschnittstelle mit einem lokalen Netzwerk enthält, die geeignet ist, eine von einem Endgerät des lokalen Netzwerks gesendete Netzwerkerkennung-Nachricht zu empfangen, wobei die Vorrichtung **dadurch gekennzeichnet ist, dass** sie enthält:
- eine Kommunikationsschnittstelle auf einem lokalen Netzwerk, die geeignet ist, eine Netzwerkverbindungsangebot-Nachricht an das Endgerät zu senden, wobei die Nachricht mindestens zwei Adressen der Kommunikationsvorrichtung enthält, wobei eine erste der Adressen einer ersten Dienstqualitätsparametrierung der Kommunikationsvorrichtung für den Zugang zum Weitverkehrsnetzwerk zugeordnet ist, wobei eine zweite der Adressen einer zweiten Dienstqualitätsparametrierung der Kommunikationsvorrichtung für den Zugang zum Weitverkehrsnetzwerk zugeordnet ist, und
- Kommunikationseinrichtungen, die geeignet sind, mindestens ein Datenpaket vom Endgerät und für eine der Adressen der Kommunikationsvorrichtung bestimmt zu empfangen,
- und Verarbeitungseinrichtungen des empfangenen Datenpakets gemäß der der Zieladresse der Kommunikationsvorrichtung zugeordneten Dienstqualitätsparametrierung.

14. Zusammenschalteinrichtung, die eine Kommunikationsvorrichtung nach Anspruch 13 aufweist.

15. Kommunikationsvorrichtung, die mindestens eine Kommunikationsschnittstelle mit einem lokalen Netzwerk enthält, die geeignet ist, eine Netzwerkerkennung-Nachricht auf dem lokalen Netzwerk zu übertragen, wobei die Vorrichtung **dadurch gekennzeichnet ist, dass** sie enthält:
- eine Kommunikationsschnittstelle, die geeignet ist, eine Netzwerkverbindungsangebot-Nachricht von einer Zusammenschalteinrichtung zu empfangen, die das lokale Netzwerk mit einem Weitverkehrsnetzwerk zusammenschaltet, wobei die Netzwerkverbindungsangebot-Nachricht mindestens zwei Adressen der Zusammenschalteinrichtung auf dem lokalen Netzwerk enthält, wobei eine erste der Adressen mit einer ersten Dienstqualitätsparametrierung für den Zugang zum Weitverkehrsnetzwerk über die Zusammenschalteinrichtung verbunden ist, wobei eine zweite der Adressen mit einer zweiten Dienstqualitätsparametrierung für den Zugang zum Weitverkehrsnetzwerk über die Zusammenschalteinrichtung verbunden ist, und
- eine Kommunikationsschnittstelle, die geeignet ist, mindestens ein Datenpaket an mindestens eine der Adressen der Zusammenschalteinrichtung zu senden, die in der Netzwerkverbindungsangebot-Nachricht enthalten sind.

16. Endgerät, das eine Kommunikationsvorrichtung nach Anspruch 15 aufweist.

## Claims

1. Method, implemented in an interconnection equipment for interconnection between a local area network and a wide area network, comprising:
- receiving, on at least one first interface of said interconnection equipment for interconnection with said local area network, a network discovery message transmitted by a terminal of the local area network,
the method being **characterized in that** it comprises:
- sending a network attachment offer message to the terminal, the network attachment offer message comprising at least two addresses of said interconnection equipment on said local area network, a first of said addresses being associated with a first quality of service setting of said interconnection equipment for accessing said wide area network, and a second of said addresses being associated with a second quality of service setting of said interconnection equipment for accessing said wide area network, and
- upon reception of at least one data packet from the terminal and destined for one of said addresses of said interconnection equipment contained in said network attachment offer message, processing the data packet according to the quality of service setting associated with the destination address of said interconnection equipment.

2. Method according to Claim 1, **characterized in that** the received discovery message comprises at least one indication of quality of service requested by the terminal.

3. Method according to Claim 2, **characterized in that** at least one of said addresses of said interconnection equipment depends on the quality of service requested by the terminal.

4. Method according to any one of the preceding claims, **characterized in that** the discovery message is a DISCOVER message in accordance with the DHCP protocol and that the attachment offer message is an OFFER message in accordance with the DHCP protocol.

5. Method according to any one of the preceding claims, **characterized in that** the first and/or the second quality of service setting comprises a configuration of an IP protocol on a second interface of said interconnection equipment for interconnection to the wide area network.

6. Method according to any one of the preceding claims, **characterized in that** the first and/or the second quality of service setting comprises a selection of a second interface from among a plurality of interfaces of said interconnection equipment to wide area networks.

7. Method, implemented in a terminal of a local area communication network, comprising:
- the terminal transmitting a network discovery message on said local area network,
the method being **characterized in that** it comprises:
- receiving a network attachment offer message from an interconnection equipment interconnecting said local area network with a wide area network, the network attachment offer message comprising at least two addresses of an interconnection equipment on said local area network, a first of said addresses being associated with a first quality of service setting for accessing said wide area network via said interconnection equipment and a second of said addresses being associated with a second quality of service setting of said interconnection equipment for accessing said wide area network,
- transmitting at least one data packet to one of said addresses of said interconnection equipment contained in said network attachment offer message.

8. Method according to Claim 7, **characterized in that** the discovery message comprises at least one indication of a request for at least one quality of service available to the terminal.

9. Method according to Claim 8, **characterized in that** at least one of said addresses of said interconnection equipment contained in said received attachment offer message depends on the at least one indication of quality of service requested by the terminal.

10. Method according to any one of Claims 7 to 9, **characterized in that** said local area network is a wireless network.

11. Method according to any one of Claims 7 to 10, **characterized in that** the first and/or the second quality of service setting comprises a first configuration of an IP protocol on the interface of said interconnection equipment to the wide area network.

12. Method according to any one of Claims 7 to 11, **characterized in that** the first and/or the second associated quality of service setting comprises a selection of an interface from among a plurality of interfaces of said interconnection equipment to wide area networks.

13. Communication device, comprising at least one communication interface for communication with a local area network, designed to receive a network discovery message transmitted by a terminal of said local area network, the device being **characterized in that** it comprises:
- a communication interface for communication on a local area network, designed to send a network attachment offer message to the terminal, the message comprising at least two addresses of said communication device, a first of said addresses being associated with a first quality of service setting of said communication device for accessing said wide area network, a second of said addresses being associated with a second quality of service setting of said communication device for accessing said wide area network, and
- communication means designed to receive at least one data packet from the terminal and destined for one of said addresses of said communication device,
- and processing means for processing the received data packet according to the quality of service setting associated with said destination address of said communication device.

14. Interconnection equipment including a communication device according to Claim 13.

15. Communication device, comprising at least one communication interface for communication with a local area network, designed to transmit a network discovery message on said local area network, the device being **characterized in that** it comprises:
- a communication interface designed to receive a network attachment offer message from an interconnection equipment interconnecting said local area network with a wide area network, the network attachment offer message comprising at least two addresses of said interconnection equipment on said local area network, a first of said addresses being associated with a first quality of service setting for accessing said wide area network via said interconnection equipment, a second of said addresses being associated with a second quality of service setting for accessing said wide area network via said interconnection equipment, and
- a communication interface designed to transmit at least one data packet to at least one of said addresses of said interconnection equipment contained in the network attachment offer message.

16. Terminal including a communication device according to Claim 15.
